# EUROPÄISCHE PATENTSCHRIFT

(11) **EP 1 762 441 B1**
(45) Veröffentlichungstag und Bekanntmachung des Hinweises auf die Patenterteilung: **22.07.2009**
(21) Anmeldenummer: 06010789.3
(22) Anmeldetag: 26.05.2006
(51) Int. Cl.: B60R 21/02, B60R 21/06

(54) **Schutzeinrichtung für Fahrzeuginsassen**
Protection device for vehicle passengers
Dispositif de protection pour passager de véhicule

(30) Priorität: 13.09.2005 DE 102005043768
(43) Veröffentlichungstag der Anmeldung: 14.03.2007
(73) Patentinhaber: Dr. Ing. h.c. F. Porsche Aktiengesellschaft, 70435 Stuttgart (DE)
(72) Erfinder: Fengel, Paul-Dieter, 71735 Eberdingen (DE); Bühner, Roland, 70736 Fellbach-Schmiden (DE)

(56) Entgegenhaltungen:
- EP-A2- 1 473 199
- DE-C1- 4 438 910
- DE-U1- 20 016 205
- FR-A- 2 860 200
- GB-A- 2 310 173

## Beschreibung

Bei der Erfindung wird ausgegangen von einer Schutzeinrichtung für Fahrzeuginsassen, gemäß Oberbegriff des Patentanspruchs 1.

Eine gattungsbildende Schutzeinrichtung, die auch als Trennwand bezeichnet wird, ist der DE 41 28 554 A1 zu entnehmen. Die Trennwand bildet ein Rückhalteelement für Ladegut, damit das Ladegut bei einem starken Bremsvorgang oder einem Unfall des Fahrzeugs zurück gehalten wird und die Fahrzeuginsassen nicht gefährdet. Demnach kann das Rückhalteelement zwischen zumindest einem Fahrzeugsitz und einem dahinter liegenden Laderaum, der dem Fahrzeuginnenraum zugeordnet ist, so angeordnet werden, dass es zumindest in einer aufrechten Gebrauchsstellung die Rückenlehne des Fahrzeugsitzes überragt und insbesondere bis unter das Fahrzeugdach reicht. Das Rückhalteelement kann auch in eine abgeklappte Ruhestellung verlagert und dort arretiert werden. Um das Rückhalteelement von der Ruhe- in die Gebrauchsstellung und umgekehrt überführen zu können, ist es an der Rückenlehne um eine Schwenkachse gelagert, die somit eine untere Befestigungseinrichtung für das Rückhalteelement darstellt. Zusätzlich ist eine nicht näher erläuterte obere Befestigungseinrichtung vorgesehen, um das Rückhaltelement in der Gebrauchsstellung im Bereich des Fahrzeugdaches zu halten. Die untere und obere Befestigungseinrichtung sind Bestandteile einer Verbindungseinrichtung, die dazu dient, das Rückhalteelement bei Bedarf in das Kraftfahrzeug ein- und ausbauen zu können.

Aufgabe der Erfindung ist es, eine Schutzeinrichtung der eingangs genannten Art anzugeben, die eine optimierte Befestigungseinrichtung aufweist.

Gelöst wird diese Aufgabe mit einer Schutzeinrichtung, die die in Anspruch 1 angeführten Merkmale umfasst. Weitere Ausgestaltungen der Erfindung sind in den Unteransprüchen angegeben.

Die mit der Erfindung hauptsächlich erzielten Vorteile sind darin zu sehen, dass durch die Integration einer Arretiereinrichtung für die Ruhestellung des Rückhalteelements in die untere Befestigungseinrichtung eine vereinfachte und komfortable Bedienung der Schutzeinrichtung gegeben ist. Außerdem ergibt sich ein kompakter Aufbau, weil die untere Befestigungseinrichtung die Arretiereinrichtung und die Spanneinrichtung in sich vereint. Ferner lässt sich mit der Spanneinrichtung das Rückhaltelement sicher befestigen, wobei überdies ein gewisser Toleranzausgleich durch die Spanneinrichtung gegeben ist, wenn der Abstand zwischen oberer und unterer Befestigungseinrichtung variiert.

Bevorzugt wird die Sicherheitseinrichtung für ein Kraftfahrzeug verwendet, welches hinter den Fahrzeugsitzen eine Hutablage aufweist, an die sich dahinter ein Laderaum anschließen kann. Dieses Kraftfahrzeug ist vorzugsweise als Zweisitzer ausgeführt.

Auf einfache Art und Weise lässt sich - gemäß Anspruch 4 - die Spanneinrichtung mit einem Spannelement realisieren, das gegen die Kraft einer Federeinrichtung bewegbar ist. Das Rückhalteelement kann so zwischen der oberen und unteren Befestigungseinrichtung eingespannt werden.

Um das Einspannen des Rückhalteelements ermöglichen zu können, bildet - entsprechend Anspruch 5 - das erste Beschlagteil der unteren Befestigungseinrichtung ein Widerlager für die Spanneinrichtung.

Besonders bevorzugt wird nach Anspruch 6 eine Ausführungsform der Erfindung, nach der das Spannelement als Sicherungsmittel der Arretiereinrichtung einsetzbar ist. Die Spanneinrichtung kann demnach eine Doppelfunktion aufweisen, in dem sie einerseits das Einspannen des Rückhalteelements in Gebrauchsstellung und andererseits ein sicheres Arretieren in der Ruhestellung ermöglicht. Sofern die Arretiereinrichtung einen Formschluss (Anspruch 7) zwischen den beiden Beschlagteilen der unteren Befestigungseinrichtung aufweist, kann das Spannelement nach einer in Anspruch 9 angegebenen Ausführungsvariante diesen Formschluss sichern.

Eine besonders einfache Bedienung der unteren Befestigungseinrichtung, die die Spanneinrichtung und die Arretiereinrichtung aufweist, ist mit einer Ausgestaltung der Erfindung mit den in Anspruch 13 angeführten Merkmalen möglich.

Die Erfindung wird nachfolgend anhand eines Ausführungsbeispiels mit Bezug auf die Zeichnung näher erläutert. Es zeigen:
- Fig. 1: in einer Perspektive eine Schutzeinrichtung,
- Fig. 2: einen Schnitt entlang der Linie II-II in der Schutzeinrichtung nach Fig. 1,
- Fig. 3: ein erstes Beschlagteil einer unteren Befestigungseinrichtung der Schutzeinrichtung,
- Fig. 4: ein zweites Beschlagteil der unteren Befestigungseinrichtung und
- Fig. 5: einen Schnitt durch die untere Befestigungseinrichtung entlang der Linie V-V in Fig. 1, wobei die Schutzeinrichtung sowohl in einer Gebrauchsstellung als auch in einer Ruhestellung gezeigt ist.

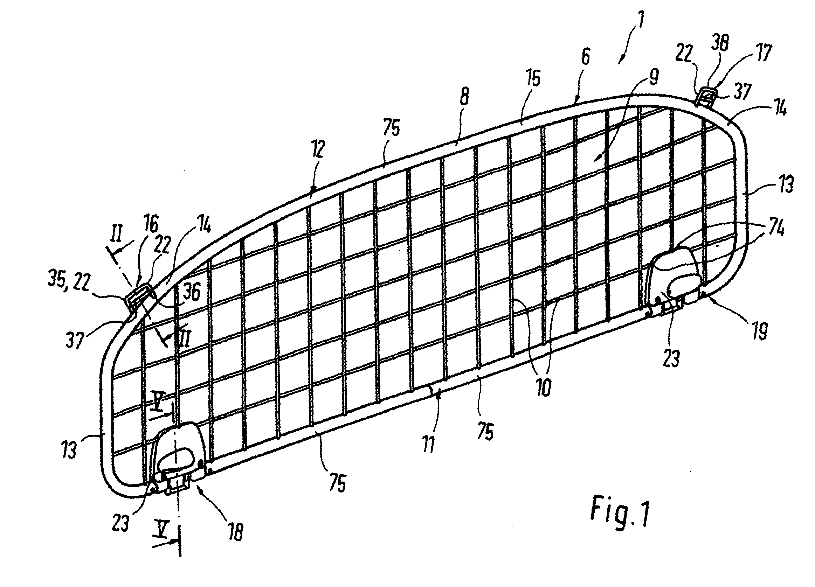

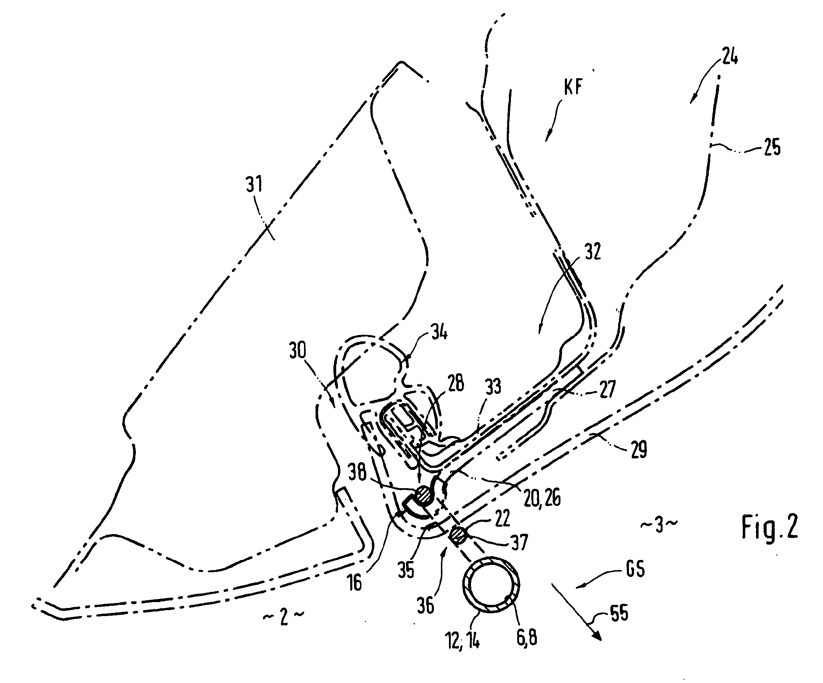

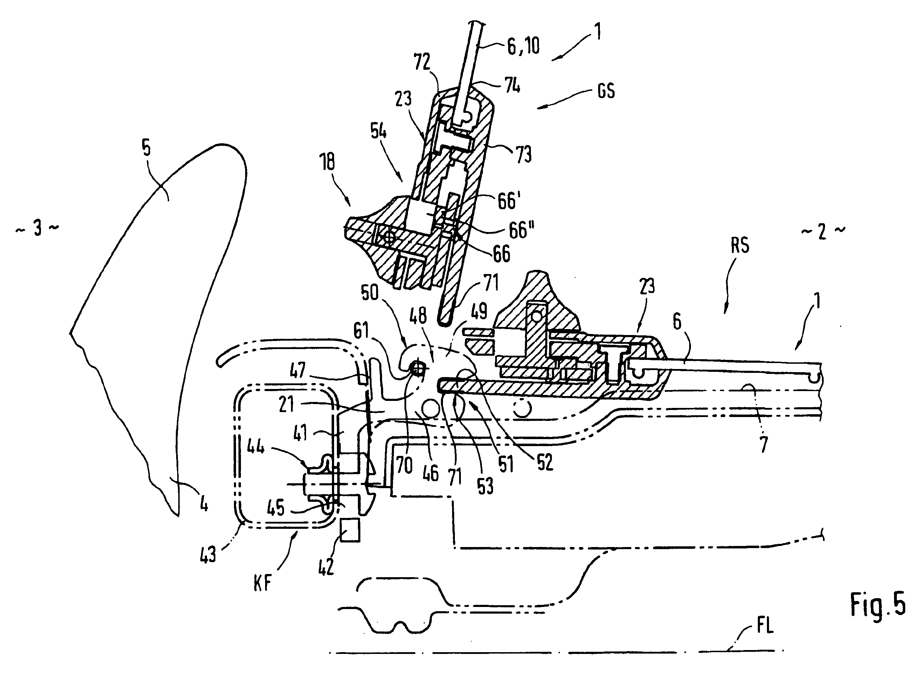

In Fig. 1 ist eine Schutzeinrichtung 1 für Insassen eines sonst nicht näher dargestellten Kraftfahrzeugs KF (Fig. 2 und 5) gezeigt, die auch als Trennwand, Trennnetz, Sperreinrichtung, Rückhalteeinrichtung oder dergleichen bezeichnet wird. Sie dient dazu, Ladegut (nicht dargestellt), welches in einem Lade- oder Gepäck- oder Kofferraum 2 (Fig. 5) des Kraftfahrzeugs befördert bzw. mitgeführt wird, in diesem Kofferraum 2 zurückzuhalten, um ein Eindringen des Ladeguts in einen Fahrgastraum 3 zu vermeiden, wenn das Kraftfahrzeug KF stark abgebremst wird oder in einen Unfall verwickelt ist. Fahrgastraum 3 und Kofferraum 2 sind Bestandteile eines Fahrzeuginnenraums des Kraftfahrzeugs. Die Funktion einer solchen Schutzeinrichtung 1 ist jedoch bekannt, so dass darauf nicht weiter eingegangen wird.

Die Schutzeinrichtung 1 wird demnach hinter zumindest einem in dem Fahrgastraum 3 angeordneten Fahrzeugsitz befestigt, von dem in Fig. 5 lediglich eine Rückenlehne 4, ggf. mit integrierter Kopfstütze 5, zu sehen ist. Die Schutzeinrichtung 1 befindet sich mithin zwischen dem Fahrzeugssitz bzw. dem Fahrgastraum 3 und dem Kofferraum 2 und trennt die beiden Räume 2 und 3 voneinander ab. Dazu weist die Schutzeinrichtung 1 ein Rückhalteelement 6 auf, das sich quer im Fahrzeuginnenraum, vorzugsweise über nahezu dessen gesamte Breite, erstreckt und das sich, um Schutzwirkung entfalten zu können, in eine aufrechte Gebrauchsstellung GS (Fig. 5), sowie in eine abgeklappte, insbesondere etwa horizontale, Ruhestellung RS verlagern lässt, in der es benachbart zu bzw. auf einer Hutablage 7 abgelegt ist. Das Rückhalteelement 6 ist im gezeigten Ausführungsbeispiel als umrahmtes Gitter mit einer von einem Rahmen 8 umgebenen Gitterstruktur 9 ausgeführt. Alternativ könnte auch eine durchgehende flächige Wand, beispielsweise aus Plexiglas, Verwendung finden. Die Gitterstruktur 9 kann aus Drähten 10 oder einem Netz bzw. Gefecht hergestellt sein, die mit dem starren Rahmen 8 verbunden sind. Das Rückhalteelement 6 ist an den Querschnitt des Fahrzeuginnenraums angepasst und weist im Ausführungsbeispiel die Kontur eines auf dem Rücken 11 liegenden D auf, dessen den Rücken überspannender Bogen 12 seitliche, aufrechte Abschnitte 13 besitzt, die über schräge Abschnitte 14 in einen zum Rücken 11 parallel verlaufenden Abschnitt 15 übergehen.

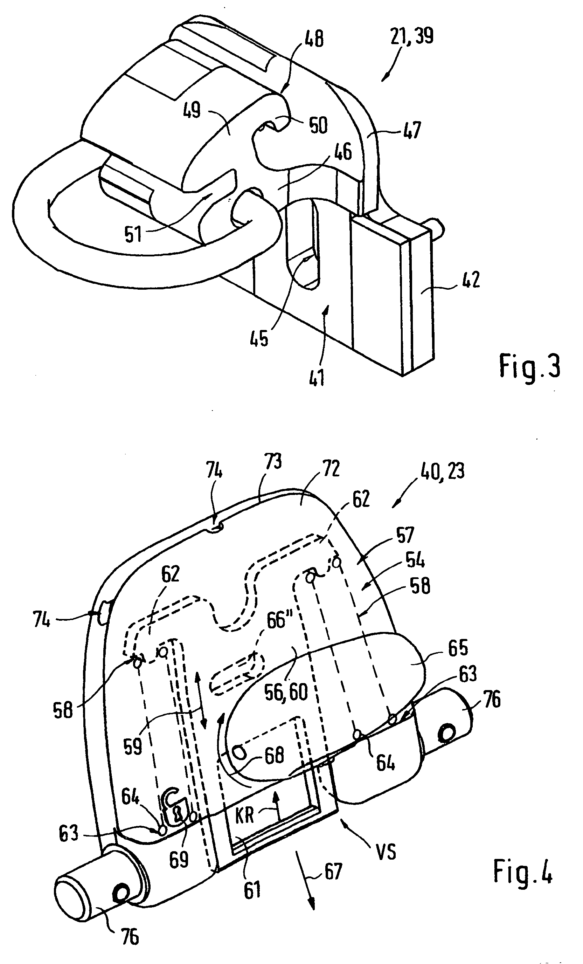

Um die Schutzeinrichtung 1 im Fahrzeuginnenraum lösbar befestigen zu können, ist eine Verbindungseinrichtung vorgesehen, die mehrere Befestigungseinrichtungen 16, 17, 18 und 19 aufweist, die um den Umfang des Rahmens 8 verteilt angeordnet sind. Bezogen auf die aufrechte Gebrauchsstellung GS des Rückhalteelements 6 sind zumindest eine obere Befestigungseinrichtung 16 bzw. 17 und zumindest eine untere Befestigungseinrichtung 18 bzw. 19 vorgesehen. Im dargestellten Ausführungsbeispiel sind zwei obere Befestigungseinrichtungen 16 und 17 am Bogen 12, insbesondere an den schrägen Abschnitten 14, und zwei untere Befestigungseinrichtungen 18 und 19 an dem Rücken 11, insbesondere benachbart zu den aufrechten Abschnitten 13, positioniert. Sämtliche Befestigungseinrichtungen 16 bis 19 besitzen erste Beschlagteile 20 bzw. 21 (Fig. 2 und 5), die fest mit dem Kraftfahrzeug KF verbunden sind, und zweite Beschlagteile 22 bzw. 23, die dem Rückhalteelement 6 zugeordnet sind. Die oberen Befestigungseinrichtungen 16 und 17 sind im Wesentlichen identisch ausgeführt; gleiches gilt für die unteren Befestigungseinrichtungen 18 und 19. Nachfolgend wird daher lediglich die obere Befestigungseinrichtung 16 anhand von Fig. 1 und 2 und die untere Befestigungseinrichtung 18 mit Bezug auf die Fig. 3 bis 5 näher erläutert.

Die Fig. 2 zeigt einen Schnitt durch die Schutzeinrichtung 1 im Bereich der oberen Befestigungseinrichtung 16, die einem Fahrzeugdach 24 des Kraftfahrzeugs KF zugeordnet ist. Im Schnitt des Fahrzeugdaches 24 ist ein Dachrahmen 25 zu sehen, an dem das erste Beschlagteil 20 befestigt ist. Dieses ist als Aufhängung 26 ausgeführt und weist einen streifenförmigen Verbindungsabschnitt 27 auf, der an der Innenseite des Dachrahmens 25 befestigt ist. Ferner umfasst das erste Beschlagteil 20 einen frei stehenden Hakenabschnitt 28, der etwa U-förmig gebogen ist. Der Dachrahmen 25 ist mit einem Innenverkleidungsteil 29 versehen, das im Bereich des Hakenelements 28 ausgespart ist, so dass der Verbindungsabschnitt 27 nicht zu sehen bzw. verblendet ist. Außerdem begrenzt der Dachrahmen 25 eine Karosserieöffnung 30, in die ein Heckklappe 31 eingesetzt ist, über die ein Zugang zu dem darunter liegenden Kofferraum 2 gegeben ist. Überdies besitzt der Dachrahmen 25 einen so genannten Dichtkanal 32, der von einer Abstellung 33 des Dachrahmens 25 gebildet ist. Die Abstellung 33 trägt an ihrem freien, nach oben abgebogenen Ende eine Dichtung 34 für die Heckklappe 31. An der Abstellung 33 ist die Aufhängung 26 befestigt.

Das zweite Beschlagteil 22 der oberen Befestigungseinrichtung 16 ist als in den Hakenabschnitt 28 einhängbare Öse 35 ausgeführt, die von dem Rahmen 8 des Rückhalteelements 6 ausgeht. Die Öse 35 wird gebildet durch einen U-förmigen Bügel 36, dessen freie Schenkelenden mit dem Rahmen 8 wechselseitig verbunden sind. In den Bügel 36 kann noch ein Quersteg 37 eingesetzt sein, der etwa parallel zur Basis 38 des U-förmigen Bügels 36 verläuft. In der Gebrauchsstellung GS des Rückhalteelements ist die Öse 35 mit der Basis 38 des Bügels 36 in den Hakenabschnitt 28 eingehängt.

Die untere Befestigungseinrichtung 18 gemäß Fig. 3 bis 5 setzt sich zusammen aus dem ersten Beschlagteil 21, das als Lagerbock 39 ausgeführt ist, und dem zweiten Beschlagteil 23, das als Schloss 40 realisiert ist. Der Lagerbock 39 weist - im Querschnitt gesehen - ein Winkelstück 41 auf, dessen aufrechter Befestigungsschenkel 42 der festen Anbringung des Lagerbocks 39 an dem Kraftfahrzeug KF, insbesondere an einer Querabstützung 43, dient. Die Querabstützung 43 erstreckt sich zwischen hier nicht dargestellten B-Säulen der Karosserie des Kraftfahrzeugs KF und liegt hinter dem Fahrzeugsitz mit der Rückenlehne 4. Die insbesondere als Hohlprofil realisierte Querabstützung 43 dient als Versteifung der Karosserie des Kraftfahrzeugs KF bei einem Seitenaufprall; sie ist daher für die sichere Befestigung des ersten Beschlagteils 21 geeignet. Diese Befestigung kann unlösbar oder - wie dargestellt - lösbar ausgeführt sein, wofür beispielsweise eine Schraubverbindung 44 eingesetzt wird, die den Befestigungsschenkel 42 in einem etwa senkrecht orientierten Langloch 45 durchgreift. Das Winkelstück 41 umfasst ferner einen etwa horizontal verlaufenden, sich in Richtung Kofferraum 2, also nach hinten erstreckenden Tragschenkel 46, der einen nach oben gerichteten Steg 47 und dahinter ein etwa T-förmiges Kopfstück 48 besitzt, welches Kopfstück 48 der Anbindung des zweiten Beschlagteil 23, nämlich des Schlosses 40, dient. Das Querelement 49 des Kopfstücks 48 ist in etwa parallel zur Fahrzeuglängsachse FL ausgerichtet und bildet mit einem in Richtung Rückenlehne 4 und nach unten gerichteten ersten Fortsatz einen Haken 50, an dem das zweite Beschlagteil 23 eingehängt werden kann. Ein zweiter, nach hinten gerichteter Fortsatz des Querelements 49 bildet zusammen mit dem Tragschenkel 46 eine Aufnahme 51 für ein Eingriffselement 52 einer Arretiereinrichtung 53 der unteren Befestigungseinrichtung 18, die das Rückhalteelement 6 in der in Fig. 5 zu sehenden Ruhestellung RS arretiert, worauf weiter unten noch näher eingegangen wird.

Die untere Befestigungseinrichtung 18 weist außer der Arretiereinrichtung 53 noch eine Spanneinrichtung 54 auf, deren Widerlager durch das erste Beschlagteil 21, insbesondere dessen Kopfstück 48 gebildet wird, so dass das Rückhalteelement 6 in der Gebrauchsstellung GS - bezogen auf die obere Befestigungseinrichtung 16 - gespannt gehalten bzw. zwischen oberer und unterer Befestigungseinrichtung 16 und 18 eingespannt werden kann. Die von der Spanneinrichtung 54 aufgebrachte Spannkraft ist in Fig. 2 mit einem Pfeil 55 bezeichnet, der - ausgehend von der oberen Befestigungseinrichtung 16 - in Richtung untere Befestigungseinrichtung 18 orientiert ist.

Die Spanneinrichtung 54 ist mit einem Spannelement 56 ausgestattet, das in einem Schlossgehäuse 57 des Schlosses 40 gegen die Kraft einer Federeinrichtung 58 in Doppelpfeilrichtung 59 verschieblich gelagert ist. Das Spannelement 56 ist als flacher Schieber 60 ausgeführt, der an seinem aus dem Schlossgehäuse 57 herausragenden Ende einen Durchbruch als Öse 61 aufweist, die in Eingriff mit dem Haken 50 des Lagerbocks 39 gebracht werden kann, wie dies in Fig. 5 zu sehen ist. An seinem anderen Ende weist der Schieber 60 zumindest einen seitlichen Federarm 62 auf, zwischen dem und einem Gegenlager 63 im Schlossgehäuse 57 eine Feder 64 der Federeinrichtung 58 eingesetzt ist. Die Feder 64 ist vorzugsweise als Schraubenfeder ausgeführt. Es können, wie gezeigt, zwei Federarme 62 und entsprechend zwei Federn 64 sowie zwei Gegenlager 63 für die Federeinrichtung 58 vorgesehen sein. Die von der Federeinrichtung 58 aufgebrachte Kraft KR zieht das Spannelement 56 in das Schlossgehäuse hinein.

Um das Rückhalteelement 6 in Gebrauchsstellung GS bringen zu können, kann das Spannelement 56 mit seiner Öse 61 in den Haken 50 eingehängt werden. Anschließend kann von Hand das Rückhalteelement 6 entgegen Pfeilrichtung 55, also in Richtung obere Befestigungseinrichtung 16 gezogen werden, wodurch das Spannelement 56 gegen die Kraft der Federeinrichtung 58 aus dem Schlossgehäuse 57 herausgezogen wird, bis die Öse 35 der oberen Befestigungseinrichtung 16 in die dafür vorgesehene Aufhängung 26 mit dem Hakenabschnitt 28 eingehängt werden kann.

Bevorzugt wird jedoch eine Ausführungsform des Schlosses 40 mit einer bewegbaren Handhabe 65, die als Drehhebel ausgeführt und im Schlossgehäuse 57 gelagert ist. Die Handhabe 65 wirkt mit einem Kopplungsmittel 66, beispielsweise einem Exzentermittel 66', formschlüssig, beispielsweise in eine Ausnehmung 66" am Schieber 60 eingreifend, auf den Schieber 60 bzw. das Spannelement 56 so ein, dass der Schieber 60 entgegen der Kraft der Federeinrichtung 58 in eine aus dem Schlossgehäuse 57 teilweise heraus ragende Freigabestellung verlagert wird, so dass die am Schieber 60 ausgebildete Öse 61 über das Schlossgehäuse 57 übersteht (Pfeilrichtung 67) und ohne weiteres in den Haken 50 und zudem die obere Öse 35 in den Hakenabschnitt 28 der oberen Befestigungseinrichtung 16 eingehängt werden können. Danach wird die Handhabe 65 wieder in die in Fig. 4 gezeigte Stellung (Pfeilrichtung 68) gedreht, die mit der Verriegelungsstellung VS des Schiebers 60 korrespondiert, wodurch der Schieber 60 durch die Federeinrichtung 58 wieder in das Schlossgehäuse 57 hineingezogen wird. Somit ist das Rückhalteelement 6 zwischen der oberen und unteren Befestigungseinrichtung 16 und 18 in Gebrauchsstellung GS eingespannt. Der Freigabestellung des Schiebers 60 ist die das geöffnete Schlosssymbol 69 (Fig. 4) überdeckende Stellung der Handhabe 65 zugeordnet.

Soll das Rückhalteelement 6 aus der Gebrauchsstellung GS in die Ruhestellung RS gebracht werden, wird zunächst die Handhabe 65 entgegen Pfeilrichtung 68 gedreht, worauf der Schieber 60 seine oben beschriebene Freigabestellung einnimmt, anschließend wird die obere Öse 35 aus dem Hakenabschnitt 28 ausgehängt und danach das Rückhalteelement 6 um eine gedachte Schwenkachse 70 nach hinten in Richtung Hutablage 7 geklappt. Durch Zurückdrehen der Handhabe 65 in Pfeilrichtung 68 in die in Fig. 4 gezeigte Stellung kann die Federeinrichtung 58 den Schieber 60 wieder zurück in das Schlossgehäuse 57 ziehen, wodurch das Rückhalteelement 6 mit seinem Eingriffselement 52 in die Aufnahme 51 hinein gezogen und dadurch die Arretiereinrichtung 53 aktiviert wird. Das Spannelement 56 bzw. der Schieber 60 in der Verriegelungsstellung VS hält die zwischen dem ersten und zweiten Beschlagteil 21 und 23 der unteren Befestigungseinrichtung 18 wirkenden Formschlussmittel, nämlich Aufnahme 51 und Eingriffselement 52, in Eingriff miteinander und bildet somit ein Sicherungsmittel für die Arretiereinrichtung 53. Ist die Arretiereinrichtung 53 wie eben beschrieben aktiviert, ist das Rückhalteelement 6 in der Ruhestellung RS gesperrt und kann nicht in die Gebrauchsstellung GS verschwenkt werden. Um eine Geräuschentwicklung, beispielsweise Klappern, zwischen den Formschlussmittel zumindest weitgehend zu vermeiden, kann an zumindest einem der Formschlussmittel noch ein Dämpfungsbelag 71 aufgebracht sein. Vorzugsweise ist dieser Dämpfungsbelag 71 dem Eingriffselement 52 zugeordnet und insbesondere als aufklebbarer Streifen ausgeführt, der das Eingriffselement 52 umgibt. Wie Fig. 5 noch zeigt, geht das Eingriffselement 45 als ein Fortsatz von dem Schlossgehäuse 57 aus, das im Übrigen zweiteilig ausgeführt sein kann, so dass zwischen seinen Gehäuseteilen 72 und 73 die Gitterstruktur 9 zu liegen kommt. Entsprechende Aussparungen 74 können randseitig an zumindest einem der Gehäuseteile 72 und 73 für die Gitterstruktur 9 vorgesehen sein.

In bevorzugter Ausführung ist der Rahmen 8 aus einem oder mehreren Rohrabschnitten 75 zusammengesetzt, wobei zwischen zwei Rohrabschnitten 75 im Bereich des Rückens 11 die zweiten Beschlagteile 23 der unteren Befestigungseinrichtungen 18 und 19 eingesetzt und mit den Rohrabschnitten 75 verbunden sein können. Für die Verbindung zwischen dem zweiten Beschlagteil 23 und dem jeweiligen Rohrabschnitt 75 ist an dem Beschlagteil 23 jeweils ein Kopplungsfortsatz 76 ausgebildet, auf den der Rohrabschnitt 75 aufgesteckt und damit fest verbunden wird. Die Kopplungsfortsätze 76 gehen vorzugsweise von dem Schlossgehäuse 57 aus. Alternativ könnten die Enden der Rohrabschnitte 75 in entsprechende Rohraufnahmen (nicht gezeigt) am zweiten Beschlagteil 23 eingesteckt sein.

## Patentansprüche

1. Schutzeinrichtung (1) für Fahrzeuginsassen eines Kraftfahrzeugs (KF), mit einem Rückhalteelement (6), das zwischen einem Fahrzeugsitz und einem dahinter liegenden, zur Aufnahme von Ladegut dienenden Fahrzeuginnenraum anordenbar und wahlweise in eine aufrechte Gebrauchsstellung (GS) und eine arretierbare Ruhestellung (RS) schwenkbar ist, und mit einer Verbindungseinrichtung für das Rückhalteelement (6), um dieses mit dem Kraftfahrzeug (KF) lösbar verbinden sowie in der Gebrauchsstellung (GS) halten zu können, wobei die Verbindungseinrichtung dazu eine obere und untere Befestigungseinrichtung (16 bis 19) umfasst, von denen die obere Befestigungseinrichtung (16, 17) einem Fahrzeugdach (24) zugeordnet ist und von denen die untere Befestigungseinrichtung (18, 19) das Schwenken des Rückhalteelements (6) ermöglicht und dem Fahrzeugsitz zugeordnet ist, **dadurch gekennzeichnet, dass** die untere Befestigungseinrichtung (18, 19) eine Arretiervorrichtung (53) aufweist, die das Rückhalteelement (6) in der etwa horizontal ausgerichteten Ruhestellung (RS) arretiert, und dass die untere Befestigungseinrichtung (18, 19) eine Spanneinrichtung (54) aufweist, die das Rückhalteelement (6) in der Gebrauchsstellung (GS) - bezogen auf die obere Befestigungseinrichtung (16, 17) - gespannt hält.

2. Schutzeinrichtung nach Anspruch 1, **dadurch gekennzeichnet, dass** die obere Befestigungseinrichtung (16, 17) zumindest ein am Kraftfahrzeug (KF) fest anbringbares erstes Beschlagteil (20), insbesondere eine Aufhängung (26), und zumindest ein an dem Rückhalteelement (6) angeordnetes zweites Beschlagteil (22), insbesondere eine Öse (35), aufweist.

3. Schutzeinrichtung nach Anspruch 1, **dadurch gekennzeichnet, dass** die untere Befestigungseinrichtung (18, 19) zumindest ein am Kraftfahrzeug (KF) fest anbringbares erstes Beschlagteil (21), insbesondere einen Lagerbock (39), und zumindest ein an dem Rückhalteelement (6) angeordnetes zweites Beschlagteil (23), insbesondere ein Schloss (40), aufweist.

4. Schutzeinrichtung nach Anspruch 1, **dadurch gekennzeichnet, dass** die Spanneinrichtung (54) ein gegen die Kraft einer Federeinrichtung (58) bewegbares Spannelement (56) aufweist, welches Bestandteil des zweiten Beschlagteils (23) ist.

5. Schutzeinrichtung nach einem der vorhergehenden Ansprüche, **dadurch gekennzeichnet, dass** das erste Beschlagteil (21) der unteren Befestigungseinrichtung (18, 19) ein Widerlager der Spanneinrichtung (54) bildet und dass das Spannelement (56) mit diesem ersten Beschlagteil (21) in Eingriff steht, wenn das Rückhalteelement (6) die Gebrauchsstellung (GS) einnimmt.

6. Schutzeinrichtung nach einem der vorhergehenden Ansprüche, **dadurch gekennzeichnet, dass** das Spannelement (56) mit dem ersten Beschlagteil (21) der unteren Befestigungseinrichtung (18, 19) in Eingriff steht, wenn das Rückhalteelement (6) seine Ruhelage (RS) einnimmt, wobei das Spannelement (56) ein Sicherungselement der Arretiereinrichtung (53) bildet.

7. Schutzeinrichtung nach einem der vorhergehenden Ansprüche, **dadurch gekennzeichnet, dass** die Arretiereinrichtung (53) Formschlussmittel zwischen dem ersten und zweiten Beschlagteil (21, 23) der unteren Befestigungseinrichtung (18, 19) aufweist.

8. Schutzeinrichtung nach Anspruch 7, **dadurch gekennzeichnet, dass** zumindest ein Formschlussmittel einen Dämpfungsbelag (71) aufweist.

9. Schutzeinrichtung nach einem der vorhergehenden Ansprüche, **dadurch gekennzeichnet, dass** das Spannelement (56) die Formschlussmittel in Eingriff hält und so das Sicherungsmittel der Arretiereinrichtung (53) darstellt.

10. Schutzeinrichtung nach einem der vorhergehenden Ansprüche, **dadurch gekennzeichnet, dass** als Formschlussmittel an dem ersten Beschlagteil (21) eine Aufnahme (51) und an dem zweiten Beschlagteil (23) ein Eingriffselement (52) ausgebildet ist, welches Eingriffselement (52) in der Ruhestellung (RS) des Rückhalteelements (6) in die Aufnahme (51) hinein ragt.

11. Schutzeinrichtung nach einem der vorhergehenden Ansprüche, **dadurch gekennzeichnet, dass** das Spannelement (56) als Schieber (60) ausgeführt ist.

12. Schutzeinrichtung nach einem der vorhergehenden Ansprüche, **dadurch gekennzeichnet, dass** das zweite Beschlagteil (23) der unteren Befestigungseinrichtung (18, 19) als Schloss (40) mit einem Schlossgehäuse (57) ausgeführt ist, in dem das Spannelement (56) gegen die Kraft der Federeinrichtung (58) herausziehbar gelagert ist.

13. Schutzeinrichtung nach einem der vorhergehenden Ansprüche, **dadurch gekennzeichnet, dass** das Schloss (40) eine bewegbare Handhabe (65) aufweist, die das Spannelement (56) betätigt, so dass es wahlweise gegen die Federeinrichtung (58) in eine aus dem Schlossgehäuse (57) teilweise herausragende Freigabestellung und in eine Verriegelungsstellung (VS) bewegbar ist, in der das Spannelement (56) durch die Federeinrichtung (58) in das Schlossgehäuse (57) hineingezogen wird, wodurch das Rückhaltelement (6) in Gebrauchsstellung (GS) gespannt gehalten oder in Ruhestellung (RS) durch die Arretiereinrichtung (53) arretiert ist.

## Claims

1. Protective device (1) for vehicle occupants of a motor vehicle (MV), with a restraining element (6) which can be arranged between a vehicle seat and a vehicle interior space situated behind it and serving to receive a load, and which can optionally be pivoted into an upright use position (UP) and a lockable rest position (RP), and with a connecting device for the restraining element (6) in order to be able to connect the latter releasably to the motor vehicle (MV) and to be able to hold it in the use position (UP), the connecting device comprising for this purpose an upper and lower fastening device (16 to 19), of which the upper fastening device (16, 17) is assigned to a vehicle roof (24) and of which the lower fastening device (18, 19) permits the pivoting of the restraining element (6) and is assigned to the vehicle seat, **characterized in that** the lower fastening device (18, 19) has a locking device (53) which locks the restraining element (6) in the approximately horizontally oriented rest position (RP), and **in that** the lower fastening device (18, 19) has a clamping device (54) which keeps the restraining element (6) clamped - with respect to the upper fastening device (16, 17) - in the use position (UP).

2. Protective device according to Claim 1, **characterized in that** the upper fastening device (16, 17) has at least one first fitting (20), in particular a suspension means (26), which can be attached fixedly to the motor vehicle (MV), and at least one second fitting (22), in particular an eyelet (35), which is arranged on the restraining element (6).

3. Protective device according to Claim 1, **characterized in that** the lower fastening device (18, 19) has at least one first fitting (21), in particular a bearing bracket (39), which can be attached fixedly to the motor vehicle (MV), and at least one second fitting (23), in particular a lock (40), which is arranged on the restraining element (6).

4. Protective device according to Claim 1, **characterized in that** the clamping device (54) has a clamping element (56) which is movable counter to the force of a spring device (58) and is part of the second fitting (23).

5. Protective device according to one of the preceding claims, **characterized in that** the first fitting (21) of the lower fastening device (18, 19) forms an abutment of the clamping device (54), and **in that** the clamping element (56) is in engagement with this first fitting (21) when the restraining element (6) takes up the use position (UP).

6. Protective device according to one of the preceding claims, **characterized in that** the clamping element (56) is in engagement with the first fitting (21) of the lower fastening device (18, 19) when the restraining element (6) takes up its rest position (RP), the clamping element (56) forming a securing element of the locking device (53).

7. Protective device according to one of the preceding claims, **characterized in that** the locking device (53) has interlocking means between the first and second fittings (21, 23) of the lower fastening device (18, 19).

8. Protective device according to Claim 7, **characterized in that** at least one interlocking means has a clamping coating (71).

9. Protective device according to one of the preceding claims, **characterized in that** the clamping element (56) keeps the interlocking means in engagement and thus constitutes the securing means of the locking device (53).

10. Protective device according to one of the preceding claims, **characterized in that** the interlocking means are formed on the first fitting (21) by a receptacle (51) and on the second fitting (23) by an engagement element (52), which engagement element (52) projects into the receptacle (51) in the rest position (RP) of the restraining element (6).

11. Protective device according to one of the preceding claims, **characterized in that** the clamping element (56) is designed as a slide (60).

12. Protective device according to one of the preceding claims, **characterized in that** the second fitting (23) of the lower fastening device (18, 19) is designed as a lock (40) with a lock housing (57) in which the clamping element (56) is mounted in a manner such that it can be pulled out counter to the force of the spring device (58).

13. Protective device according to one of the preceding claims, **characterized in that** the lock (40) has a movable handle (65) which actuates the clamping element (56), so that it is optionally movable counter to the spring device (58) into a release position, in which it partially protrudes out of the lock housing (57), and into a locking position, in which the clamping element (56) is pulled into the lock housing (57) by the spring device (58), as a result of which the restraining element (6) is kept clamped in the use position (UP) or is locked in the rest position (RP) by the locking device (53).

## Revendications

1. Dispositif de protection (1) pour passagers d'un véhicule automobile (KF), comprenant un élément de retenue (6) qui peut être disposé entre un siège de véhicule et un habitacle du véhicule situé derrière lui, servant à recevoir un chargement, et qui peut pivoter de manière sélective dans une position d'utilisation redressée (GS) et une position de repos verrouillable (RS), et comprenant un dispositif de connexion pour l'élément de retenue (6), afin de pouvoir connecter celui-ci de manière détachable au véhicule automobile (KF) et de pouvoir le retenir dans la position d'utilisation (GS), le dispositif de connexion comprenant à cet effet un dispositif de fixation supérieur et un dispositif de fixation inférieur (16 à 19), dont le dispositif de fixation supérieur (16, 17) est associé à un toit du véhicule (24) et dont le dispositif de fixation inférieur (18, 19) permet le pivotement de l'élément de retenue (6) et est associé au siège du véhicule, **caractérisé en ce que** le dispositif de fixation inférieur (18, 19) présente un dispositif de verrouillage (53) qui verrouille l'élément de retenue (6) dans la position de repos (RS) orientée approximativement horizontalement, et **en ce que** le dispositif de fixation inférieur (18, 19) présente un dispositif de serrage (54) qui maintient serré le dispositif de retenue (6) dans la position d'utilisation (GS), par rapport au dispositif de fixation supérieur (16, 17).

2. Dispositif de protection selon la revendication 1, **caractérisé en ce que** le dispositif de fixation supérieur (16, 17) présente au moins une première partie de ferrure (20) pouvant être montée fixement sur le véhicule automobile (KF), notamment un système d'accrochage (26), et au moins une deuxième partie de ferrure (22) disposée sur l'élément de retenue (6), notamment un oeillet (35).

3. Dispositif de protection selon la revendication 1, **caractérisé en ce que** le dispositif de fixation inférieur (18, 19) présente une première partie de ferrure (21) pouvant être montée fixement sur le véhicule automobile (KF), notamment un bloc palier (39), et une deuxième partie de ferrure (23) disposée sur l'élément de retenue (6), notamment une serrure (40).

4. Dispositif de protection selon la revendication 1, **caractérisé en ce que** le dispositif de serrage (54) présente un élément de serrage (56) déplaçable à l'encontre de la force d'un dispositif de ressort (58), qui fait partie de la deuxième partie de ferrure (23).

5. Dispositif de protection selon l'une quelconque des revendications précédentes, **caractérisé en ce que** la première partie de ferrure (21) du dispositif de fixation inférieur (18, 19) forme une butée pour le dispositif de serrage (54) et **en ce que** l'élément de serrage (56) est en prise avec cette première partie de ferrure (21) lorsque l'élément de retenue (6) adopte la position d'utilisation (GS).

6. Dispositif de protection selon l'une quelconque des revendications précédentes, **caractérisé en ce que** l'élément de serrage (56) est en prise avec la première partie de ferrure (21) du dispositif de fixation inférieur (18, 19), lorsque l'élément de retenue (6) adopte sa position de repos (RS), l'élément de serrage (56) formant un élément de sécurité pour le dispositif de verrouillage (53).

7. Dispositif de protection selon l'une quelconque des revendications précédentes, **caractérisé en ce que** le dispositif de verrouillage (53) présente des moyens d'engagement par correspondance géométrique entre la première et la deuxième partie de ferrure (21, 23) du dispositif de fixation inférieur (18, 19).

8. Dispositif de protection selon la revendication 7, **caractérisé en ce qu'**au moins un moyen d'engagement par correspondance géométrique présente une garniture d'amortissement (71).

9. Dispositif de protection selon l'une quelconque des revendications précédentes, **caractérisé en ce que** l'élément de serrage (56) maintient en prise les moyens d'engagement par correspondance géométrique et constitue ainsi le moyen de sécurité pour le dispositif de verrouillage (53).

10. Dispositif de protection selon l'une quelconque des revendications précédentes, **caractérisé en ce qu'**un logement (51) est réalisé sur la première partie de ferrure (21) et un élément d'engagement (52) est réalisé en tant que moyen d'engagement par correspondance géométrique sur la deuxième partie de ferrure (23), l'élément d'engagement (52) pénétrant dans le logement (51) dans la position de repos (RS) de l'élément de retenue (6).

11. Dispositif de protection selon l'une quelconque des revendications précédentes, **caractérisé en ce que** l'élément de serrage (56) est réalisé sous forme de coulisseau (60).

12. Dispositif de protection selon l'une quelconque des revendications précédentes, **caractérisé en ce que** la deuxième partie de ferrure (23) du dispositif de fixation inférieur (18, 19) est réalisée sous forme de serrure (40) avec un boîtier de serrure (57), dans lequel l'élément de serrage (56) est monté de manière à pouvoir être retiré à l'encontre de la force du dispositif de ressort (58).

13. Dispositif de protection selon l'une quelconque des revendications précédentes, **caractérisé en ce que** la serrure (40) présente une poignée mobile (65) qui actionne l'élément de serrage (56) de sorte qu'il puisse être déplacé de manière sélective à l'encontre du dispositif de ressort (58) dans une position de libération dépassant partiellement hors du boîtier de serrure (57) et dans une position de verrouillage (VS), dans laquelle l'élément de serrage (56) est rentré dans le boîtier de serrure (57) sous l'action du dispositif de ressort (58), de sorte que l'élément de retenue (6) soit maintenu serré dans la position d'utilisation (GS) ou soit verrouillé dans la position de repos (RS) par le dispositif de verrouillage (53).
